**Europäisches Patentamt**

**European Patent Office**

**Office européen des brevets**

(19)

(11) Veröffentlichungsnummer: **0 220 334**
**B1**

(12)

# EUROPÄISCHE PATENTSCHRIFT

(45) Veröffentlichungstag der Patentschrift:
**20.04.88**

(21) Anmeldenummer: **85113678.8**

(22) Anmeldetag: **28.10.85**

(51) Int. Cl.⁴: **A 47 B 27/18**

(54) **Konzepthalter zur Anwendung an Schreib-, Zeichen-, Bildschirmarbeitsplätzen und dgl.**

(43) Veröffentlichungstag der Anmeldung:
**06.05.87 Patentblatt 87/19**

(45) Bekanntmachung des Hinweises auf die Patenterteilung:
**20.04.88 Patentblatt 88/16**

(84) Benannte Vertragsstaaten:
**AT BE CH DE FR GB IT LI NL SE**

(56) Entgegenhaltungen:
**DE - C - 339 415**
**FR - A - 895 337**
**US - A - 1 460 697**
**US - A - 1 956 546**

(73) Patentinhaber: **Sträter, Fritz, Unterm Bamberg 1,
D-5882 Meinerzhagen (DE)**

(72) Erfinder: **Sträter, Fritz, Unterm Bamberg 1,
D-5882 Meinerzhagen (DE)**

(74) Vertreter: **Köchling, Conrad, Dipl.-Ing. et al,
Patentanwälte, Dipl.-Ing. Conrad Köchling Dipl.-Ing.
Conrad-Joachim Köchling Fleyer Strasse 135,
D-5800 Hagen 1 (DE)**

ACTORUM AG

## Beschreibung

Die Erfindung betrifft einen Konzepthalter zur Anwendung an Schreib-, Zeichen-, Bildschirmarbeitsplätzen und dgl., bestehend aus einem Basisteil und einem daran angelenkten mehrteiligen Kragarm, welcher an seinem freien Ende eine Konzepttragplatte trägt, wobei der Kragarm am Basisteil, die Kragarmteile miteinander und die Konzepttragplatte am Kragarm mittels Schwenkgelenken verschwenkbar angeordnet sind, diesen Schwenkgelenken manuell einstellbare, mindestens reibschlüssig wirksame, die Verschwenkbarkeit der gelenkig miteinander verbundenen Teile zumindest erschwerende Feststelleinrichtungen zugeordnet sind, ferner einer Handhabe, die über ein Zwischenglied auf mehrere den Schwenkgelenken zugeordnete Feststelleinrichtungen wirksam und mindestens nahe der Konzepttragplatte angeordnet ist, zudem das Zwischenglied und die Feststelleinrichtungen innerhalb der Kragarmteile angeordnet und als Zwischenglied ein Seilzug, die Gelenkmittenachsen kreuzend, vorgesehen ist.

Derartige, als Konzepthalter brauchbare Halter sind aus der US-A-1.460.697 bekannt und erlauben, ein Konzept am Arbeitsplatz in die für den Benutzer günstigste Position zu bringen. Dabei kann der Basisteil als schwerer Ständer ausgebildet sein.

Auch kann anstelle eines Ständers am Basisteil eine Spannzwinge zum Befestigen des Konzepthalters, zum Beispiel am Tischrand, vorgesehen sein, wobei der Basisteil an der Spannzange zusätzlich um eine vertikale Achse verdrehbar gelagert sein kann.

Der Kragarm besteht aus mindestens zwei, hintereinander angeordneten Kragarmteilen, um durch Verschwenken der Kragarmteile die Konzepttragplatte in der Höhe individuell einstellen und auch die Reichweite des Kragarmes verändern zu können.

Dazu ist es erforderlich, die jeweilige Stellung der Kragarme zu verändern, wozu die an den diesbezüglichen Gelenken angeordneten Feststelleinrichtungen durch Lösen der Handhabe und damit des Seilzuges gelöst, dann die Kupplungstragplatte in die gewünschte Position gebracht und anschliessend die Feststelleinrichtung wieder in Sperrstellung gebracht werden muss. Im Stand der Technik ist aber nur unter Dehnung einzelner, zwischen den reibschlüssigen Feststelleinrichtungen befindlicher Seilabschnitte eine kraft- und reibschlüssige Verbindung zu erreichen, so dass ein erheblicher Kraftaufwand an der Handhabe ausgeübt werden muss, um die Sperrstellung zu sichern, sofern dies überhaupt gelingt. Dies ist beim Stand der Technik auch erkannt worden, so dass dort jedem Gelenk zusätzliche, manuell betätigbare Klemmeinrichtungen zugeordnet sind. Ferner ist aus der US-A-1.956.546 ein Zeichentisch mit einem um waagerechte Achsen verschwenkbaren Zeichenbrett bekannt, wobei die Schwenkachsen mittels Innenbackenbremsen arretiert werden können.

Ausgehend von diesem Stand der Technik liegt der Erfindung die Aufgabe zugrunde, einen Konzepthalter zu schaffen, bei dem mit höherer Sicherheit und geringerem Kraftaufwand ein Lösen und Feststellen der Gelenke ermöglicht wird.

Zur Lösung dieser Aufgabe wird vorgeschlagen, dass die Schwenkgelenke zur Längserstreckung des Kragarmes quer gerichtete, waagerechte, zueinander parallel verlaufende Gelenkachsen aufweisen, dass die Feststelleinrichtungen als zu den Gelenkachsen jeweils koaxial angeordnete Innenbackenbremsen ausgebildet sind, derart, dass in dem einen ersten Gelenkteil eines jeden Gelenkes mindestens eine zur Gelenkachse koaxial angeordnete Bohrung vorgesehen ist, in die eine nahezu ringförmig geschlossene, gegen Federspannung aufspreizbare Bremsbacke eingesetzt ist, die über ein zwischen die einander zugewandten Enden der Bremsbacke greifendes, am anderen, zweiten Gelenkteil gehaltertes, von der Handhabe mittelbar betätigbares Spreizglied mit dem zweiten Gelenkteil zur drehbaren Mitnahme verbunden und an die Innenseite der Bohrung mindestens reibschlüssig anlegbar ist, dass das Spreizglied um eine zur Gelenkachse parallele Achse drehbar gelagert ist, diese Drehachse zwischen den beiden einander zugewandten Enden der Bremsbacke angeordnet ist, ferner das Spreizglied etwa oval profiliert ist, wobei der kleine Durchmesser des Spreizgliedes etwa dem Abstand der einander zugewandten Enden der entspannten Bremsbacke gleicht, während der grosse Durchmesser des Spreizgliedes grösser als der Abstand der einander zugewandten Enden der an die Bohrungsinnenseite angelegten Bremsbacke ist, und dass vom Spreizglied ein Kraftarm abstrebt, an dem ein diesen in die Sperrstellung verschwenkendes Federelement und ein mit der Handhabe verbundener zum Lösen der Bremsbacke bestimmter Seilzug angreift, dass schliesslich alle als Zwischenglieder ausgebildeten Seilzüge mittels der einen Handhabe gemeinsam betätigbar sind.

Hierdurch ist es möglich, mit der einen Handhabe wie bisher alle Feststelleinrichtungen zu lösen und zu sperren, wobei aber lediglich die Kraft der auf die Spreizglieder wirkenden Federn überwunden werden muss. Zudem ist in der Losstellung jede Bremsbacke völlig von der zu dieser verdrehbaren Bohrungsinnenseite gelöst und legt sich durch die Eigenfederung um die relativ unverdrehbare Bohrungsfläche an, was die Handhabungskräfte herabsetzt.

Durch Aufrauhung, Rändelungen oder Verzahnungen der Bohrungsinnenseite und der Anlagefläche der Bremsbacke kann eine formschlüssige Anlage der Bremsbacke an der Bohrungsinnenseite erreicht werden, so dass ein ungewolltes Verstellen wegen nicht ausreichender Reibekräfte ausgeschlossen ist.

Weitere vorteilhafte Ausgestaltungen sind hierzu in den Ansprüchen 3 bis 6 offenbart.

Eine weitere bevorzugte Ausgestaltung der Gelenke, durch die unter anderem die Funktionssicherheit erhöht und auch die Gebrauchsdauer des vorbeschriebenen Gegenstandes verbessert wird, ist in Anspruch 7 bezeichnet.

Dabei sind vorzugsweise in den Drehzapfen beider Kragarm-Profilstäbe zueinander koaxial angeordnete Bohrungen vorgesehen, in die ein Bolzen eingesetzt ist.

Um auch bei an sich ungünstiger Anordnung des Basisteiles am Arbeitsplatz dennoch die günstigste Position für die Konzepttragplatte einstellen zu können, ist es vorteilhaft, wenn das die Konzepttragplatte mit dem Kragarm verbindende Gelenk als Kardangelenk ausgebildet ist, und wobei vorzugsweise zudem dem Kardangelenk mindestens eine eigene Feststellvorrichtung, insbesondere in Form eines drehbar gelagerten Spannexzenters zugeordnet ist, um die Konzepttragplatte vom Kragarm unabhängig einstellen zu können. Weitere vorteilhafte Ausgestaltungen der auf die Feststelleinrichtung wirksamen Handhabe sind in den Ansprüchen 10 bis 12 offenbart.

Ein Ausführungsbeispiel der Erfindung ist in den Zeichnungen dargestellt und wird im folgenden näher beschrieben.

Es zeigen:

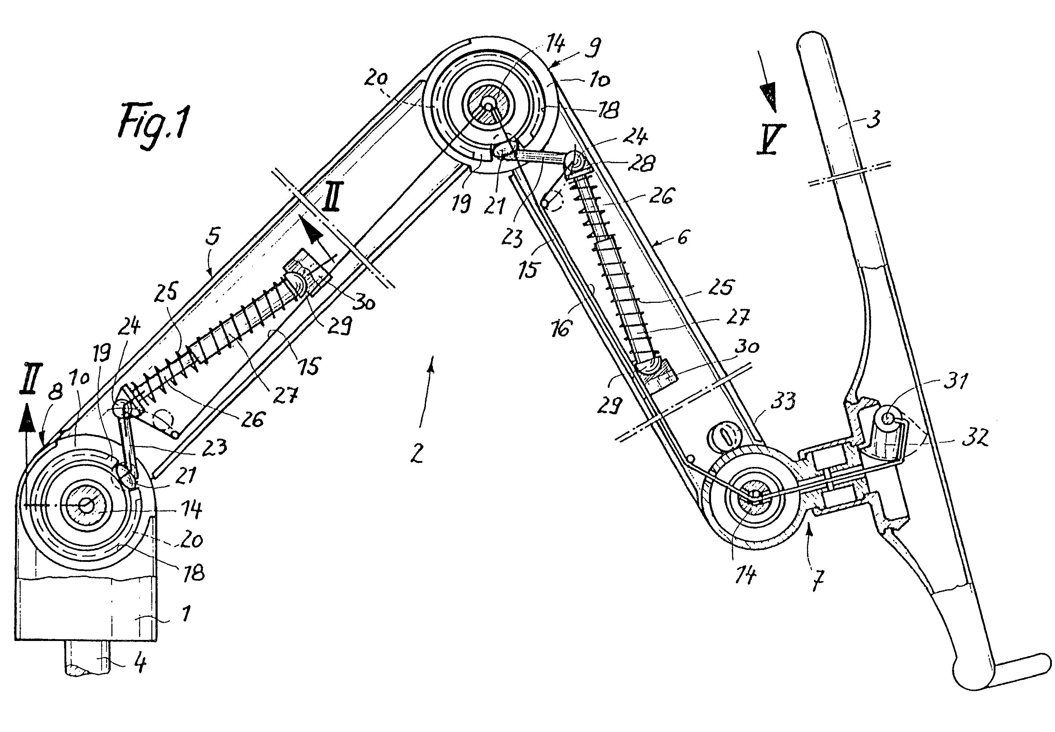

Fig. 1 einen Konzepthalter von vorn gesehen, und zwar grösstenteils aufgebrochen dargestellt;

Fig. 2 Teile desselben entsprechend der Linie II-II der Fig. 1 gesehen;

Fig. 3 Teile desselben mit einer Gelenkfeststellvorrichtung, und zwar in der Sperrstellung;

Fig. 4 desgleichen mit gelöster Feststelleinrichtung;

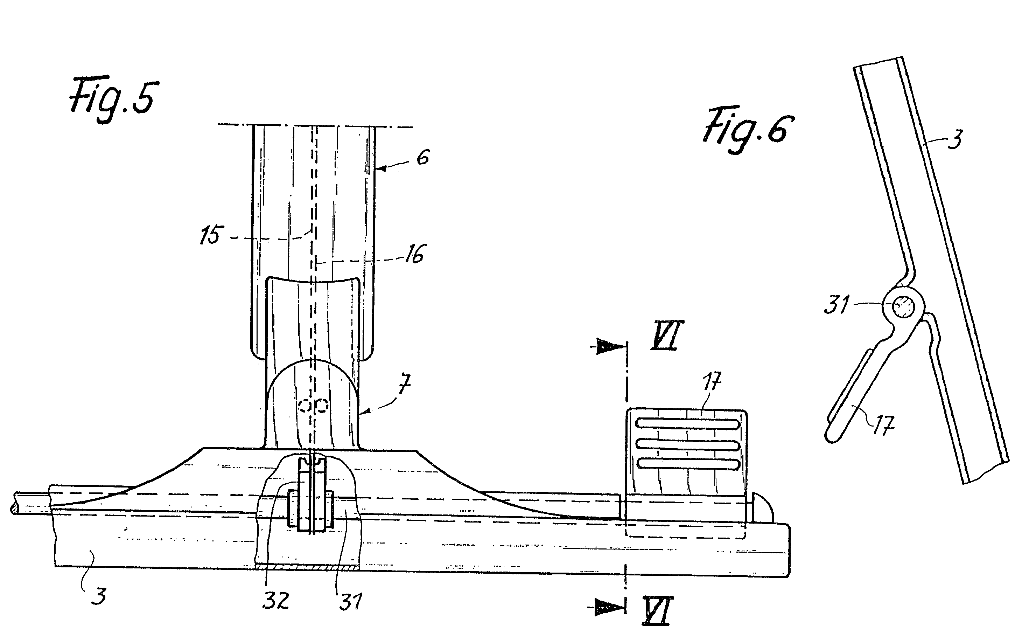

Fig. 5 Einzelteile des Konzepthalters in Richtung des Pfeiles V der Fig. 1 gesehen;

Fig. 6 desgleichen im Schnitt der Linie VI-VI der Fig. 5 gesehen.

Dieser Konzepthalter umfasst im wesentlichen ein Basisteil 1, einen mehrteiligen Kragarm 2 und eine am freien Ende des Kragarmes 2 angeordnete Konzepttragplatte 3. Der Basisteil 3 ist mittels eines Zapfens 4 an einem nicht dargestellten Ständer oder an einer nicht dargestellten Spannzwinge um eine vertikale Achse drehbar gehalten.

Der Basisteil 3 kann aber auch mit Einrichtungen zum Befestigen des Konzepthalters an einer aufrechten Wand ausgerüstet werden.

Der am Basisteil 1 angelenkte Kragarm 2 besteht aus zwei länglichen Kragarmteilen 5 und 6, die miteinander gelenkig verbunden sind, und am freien Ende des Gragarmes 2 ist die Konzepttragplatte 3 mittels eines Kardangelenkes 7 befestigt, dessen Gelenkachsen zueinander rechtwinklig gerichtet angeordnet sind.

Die beiden anderen Gelenke, nämlich das Gelenk 8 zur Verbindung des Kragarmteiles 5 mit dem Basisteil 1 und das Gelenk 9 zur Verbindung der beiden Kragarmteile 5 und 6 miteinander, sind als einachsige Drehgelenke mit zueinander parallelen waagerechten Drehachsen ausgebildet.

Die Kragarmteile 5 und 6 sind jeweils aus zwei im wesentlichen rinnenförmig profilierten Stäben so zusammengefügt, dass sie gemeinsam Kastenprofile ergeben. Am Basisteil 1 und am freien Ende des Kragarmteiles 5 sind in zwei einander abgewandten, zueinander parallelen Seiten, welche zudem zur Drehachse rechtwinklig angeordnet sind, ebene Flächen 10 angeformt, an welchen die Innenseiten eines gabelförmig ausgebildeten Endteiles des Kragarmteiles 5 bzw. 6 anliegen.

Von den Innenseiten der vorgenannten Endteile streben nach innen gerichtete Drehzapfen 11 ab, die paarweise einander entgegengerichtet in ein Durchgangsbohrung 12 des Basisteiles 1 bzw. des Kragarmteiles 5 drehbar eingreifen.

In beiden Drehzapfen 11 sind noch Sackbohrungen 13 vorgesehen, in welche ein Bolzen 14 eingefügt ist. Bei den Gelenken 8 und 9 ist noch jeweils eine Feststellvorrichtung zugefügt, die gemeinsam über Seilzüge 15 und 16 mittels einer an der Konzepttragplatte 3 angeordneten Handhabe 17 betätigt werden können.

Die Feststelleinrichtungen sind als Innenbackenbremsen ausgebildet, derart, dass in jeweils beiden Flächen 10 jeweils eine gegenüber der Durchgangsbohrung 12 im Durchmesser grössere und zu letzterer koaxial angeordnete Ringnut 18 vorgesehen ist.

In jede dieser Ringnuten 18 ist eine nahezu ringförmig geschlossene, aufspreizbare Backe 19 eingesetzt.

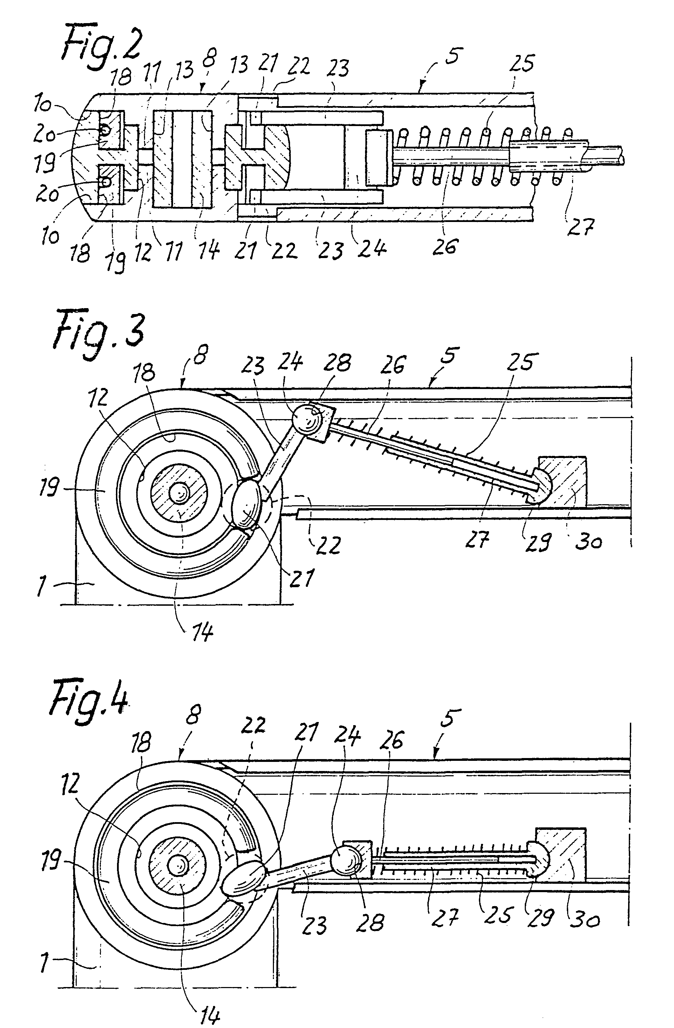

Jede Bremsbacke 19 ist von einem Federring 20 umfasst, der nach innen gerichtete Federkräfte ausübt, so dass, wie aus der Fig. 4 ersichtlich, bei entspanntem Federring 20 die Bremsbacke 19 mit Abstand von der radial äusseren Flanke der Ringnut 18 angeordnet ist, dagegen aber die Bremsbacke 19 an der radial inneren Flanke der Ringnut 18 anliegt.

Zwischen den mit Abstand voneinander angeordneten Enden einer jeden Bremsbacke 19 ist ein Spreizglied 21 vorgesehen. Diese Spreizglieder 21 sind innerhalb des Kragarmteiles 5 bzw. 6 angeordnet und an diesen um zu den Gelenkachsen parallele Achsen drehbar gelagert, wozu die oval profilierten Spreizglieder 21 neben sich angeformte, zylindrische Drehzapfen 22 aufweisen.

Der kleine Durchmesser eines jeden Spreizgliedes 21 ist kleiner als der kleinste Abstand der einander zugewandten Enden einer jeden Bremsbacke 19, während der grosse Spreizglieddurchmesser grösser als der grösstmögliche Abstand einander zugewandter Spreizgliedenden ist, so dass durch Drehen der Spreizglieder 21 die Bremsbacken 19 mit ihren Aussenseiten an die äusseren Flanken der Ringnuten 18 zumindest reibschlüssig angelegt werden können und damit die Gelenke sperren.

Vorzugsweise sind diese Korrespondenzflächen mit ineinandergreifenden Verzahnungen versehen, um in der Sperrstellung einen Formschluss zu erreichen und damit eine quasistarre Verbindung zu schaffen, die in der Los-Stellung gemäss Fig. 4 ausser Eingriff sind.

Von jedem Spreizglied 21 strebt ein Kraftarm 23 ab, die paarweise mittels eines zur Drehachse des Spreizgliedes 21 parallel angeordneten Zapfens 24 miteinander unlösbar verbunden sind.

Die Spreizglieder 21 eines jeden Gelenkes 8 und 9 werden mittels einer mit Vorspannung angeordneten und innerhalb der Kragarmteile 5 bzw. 6 angeordneten Schraubendruckfeder 25 in die Sperrlage (Fig. 3) verschwenkt.

Die Schraubenfedern 25 sind jeweils auf eine zweiteilige Führungsstange aufgesteckt, deren Teile 26 und 27 teleskopartig ineinandergreifen.

An beiden Enden der Teile 26 und 27 sind Schultern vorgesehen, an welchen sich die Schraubendruckfedern 28 unter Vorspannung abstützen.

Ferner ist am freien Ende des Stangenteiles 26 eine zu dessen Längserstreckung rechtwinklig gerichtete Rinne 28 vorgesehen, in die der Zapfen 24 drehbar eingreift. Der freie Endteil des Stangenteiles 27 ist als Kugelkopf 29 ausgebildet, welcher sich an einem Widerlager 30 abstützt, wozu letzteres eine dem Kugelkopf 29 angepasste kugelkalottenartige Pfanne aufweist.

An jedem Zapfen 24 ist noch der eine Endteil des Seilzuges 15 bzw. 16 befestigt und die Seilzüge 15 bzw. 16 sind im Bereich der Zapfen 24 so zu diesen hingerichtet umgelenkt, dass über die Seilzüge 15 bzw. 16 die Kraftarme 23 und somit die Spreizglieder 21 in die in Fig. 4 dargestellte Stellung verschwenkt werden können, während die Schraubendruckfedern 25 eine Spreizung der Bremsbacken 19 und somit eine reibschlüssige oder bei Verzahnung formschlüssige Anlage letzterer an die äusseren Flanken der Ringnuten bewirken (Fig. 3).

Die Seilzüge 15 und 16 sind im Bereich der Gelenke 7, 8 und 9 so durch diese hindurchgeführt, dass die Seilzüge 15 und 16 die Gelenkmittenachse kreuzen.

Hierzu sind innerhalb der Gelenkbolzen entsprechende Seilzugumlenkungen vorgesehen. Die Handhabe 17 ist von einer rückseitig der Konzepttragplatte 3 drehbar gelagerten Welle 31 durchsetzt und mit dieser fest verbunden. Auf der Welle 31 ist dem Kardangelenk 7 gegenüber ein Scheibensegment 32 fest angeordnet, auf dessen Umfang die diesem zugewandten Endteile der Seilzüge 15 und 16 so befestigt sind, dass durch Drehen der Welle 31 die zugewandten Seilzugendteile quasi auf das Scheibensegment 32 aufgewickelt werden.

Um ein einwandfreies Aufwickeln der Seilzüge 15 und 16 auf das Scheibensegment sicherzustellen, werden die Seilzüge 15 und 16 zur Welle 31 rechtwinklig ausgerichtet zugeführt. Damit die Seilzüge 15 und 16 von Linkshändlern und von Rechtshändlern gleich gut betätigt werden können, erstreckt sich die Welle nahezu über die gesamte Breite der Konzepttragplatte 3 und an beiden Enden der Welle 31 ist je eine Handhabe 17 befestigt.

Ausserdem ist noch am Kragarmteil 6 eine auf das Kardangelenk 7 wirksame und als Spannexzenter 33 ausgebildete Feststelleinrichtung vorgesehen.

Die Bremsbacken können aussenseitig auch mit Reibbelägen beschichtet sein.

Bei den den Gelenken 8 und 9 zugeordneten Feststelleinrichtungen muss noch die Bedingung erfüllt sein, dass bei in ungelöster Stellung befindlichen Feststelleinrichtungen jeweils der Kraftarm 23 und die die Schraubendruckfeder 25 tragende Führungsstange 26, 27 nicht über den Totpunkt hinaus verschwenkt werden dürfen, damit die Schraubendruckfeder 25 den Kraftarm 23 auch wieder in die Sperrstellung zurückschwenken kann. Zur Erfüllung dieser Bedingung wird, wie aus der Fig. 4 ersichtlich, der Kraftarm 23 in seiner Verschwenkbarkeit derart begrenzt, dass der vor Erreichen der Totpunktstellung, also bevor der Kragarm 23 und die Führungsstange 26, 27 gemeinsam eine Gerade bilden, am Kraftarmteil 5 bzw. 6 anschlägt.

## Patentansprüche

1. Konzepthalter zur Anwendung an Schreib-, Zeichen-, Bildschirmarbeitsplätzen und dergleichen, bestehend aus einem Basisteil (1) und einem daran angelenkten mehrteiligen Kragarm (2), welcher an seinem freien Ende eine Konzepttragplatte (3) trägt, wobei der Kragarm (2) am Basisteil (1), die Kragarmteile (5, 6) miteinander und die Konzepttragplatte (3) am Kragarm (2) mittels Schwenkgelenken (7, 8, 9) verschwenkbar angeordnet sind, diesen Schwenkgelenken (7, 8, 9) manuell einstellbare, mindestens reibschlüssig wirksame, die Verschwenkbarkeit der gelenkig miteinander verbundenen Teile zumindest erschwerende Feststelleinrichtungen zugeordnet sind, ferner einer Handhabe (17), die über ein Zwischenglied auf mehrere den Schwenkgelenken (7, 8, 9) zugeordnete Feststelleinrichtungen wirksam und mindestens nahe der Konzepttragplatte (3) angeordnet ist, zudem das Zwischenglied und die Feststelleinrichtungen innerhalb der Kragarmteile (5, 6) angeordnet und als Zwischenglied ein Seilzug (15, 16), die Gelenkmittenachsen kreuzend, vorgesehen ist, dadurch gekennzeichnet, dass die Schwenkgelenke zur Längserstreckung des Kragarmes quer gerichtete, waagerechte, zueinander parallel verlaufende Gelenkachsen aufweisen, dass die Feststelleinrichtungen als zu den Gelenkachsen jeweils koaxial angeordnete Innenbackenbremsen ausgebildet sind, derart, dass in dem einen ersten Gelenkteil (1 bzw. 5) eines jeden Gelenkes (8, 9) mindestens eine zur Gelenkachse koaxial angeordnete Bohrung vorgesehen ist, in die eine nahezu ringförmig geschlossene, gegen Federspannung aufspreizbare Bremsbacke (19) eingesetzt ist, die über ein zwischen die einander zugewandten Enden der Bremsbacke (19) greifendes, am anderen, zweiten Gelenkteil (5 bzw. 6) gehaltertes, von der Handhabe (17) mittelbar betätigbares Spreizglied (21) mit dem zweiten Gelenkteil (5 bzw. 6) zur drehbaren Mitnahme verbunden und an die Innenseite der Bohrung mindestens reibschlüssig anlegbar ist, dass das Spreizglied (21) um eine zur Gelenkachse parallele Achse drehbar gelagert ist, diese Drehachse zwischen den beiden einander zugewandten Enden der Bremsbacke (19) angeordnet ist, ferner das Spreizglied (21) etwa oval profiliert ist, wobei der kleine Durchmesser des Spreizgliedes (21) etwa den Abstand der einander zugewandten Enden der entspannten Bremsbacke (19) gleicht, während der grosse Durchmesser des Spreizgliedes (21) grösser als der Abstand der einander zugewandten Enden der an die Bohrungsinnenseite angelegten Bremsbacke (19) ist, und dass vom Spreizglied (21) ein Kraftarm (23) abstrebt, an dem ein diesen in die Sperrstellung verschwenkendes Federelement und ein mit der Handhabe (17) verbundener zum Lösen der Bremsbacke (19) bestimmter Seilzug (15 bzw. 16) angreift, dass schliesslich alle als Zwischenglieder ausgebildeten Seilzüge (15, 16) mittels der einen Handhabe (17) gemeinsam betätigbar sind.

2. Konzepthalter nach Anspruch 1, dadurch gekennzeichnet, dass die Bohrungsinnenseite und die mit dieser in der Sperrstellung in Eingriff stehende Bremsbackenfläche aufgerauht, gerändelt oder bevorzugt verzahnt sind.

3. Konzepthalter nach Anspruch 1 oder 2, dadurch gekennzeichnet, dass als Federelement eine mit Vorspannung angeordnete Schraubendruckfeder (25) vorgesehen ist, die sich einerseits am Kraftarm (23) des Spreizgliedes (21) und andererseits an einem Widerlager (30) des zweiten Gelenkteiles (5 bzw. 6) abstützt.

4. Konzepthalter nach Anspruch 3, dadurch gekennzeichnet, dass die Schraubendruckfeder (25) auf eine zweiteilige Führungsstange aufgesteckt ist, deren Teile (26, 27) teleskopartig ineinandergreifen, der eine Stangenteil (26) mit seinem freien Ende mit dem Kraftarm (23) des Spreizgliedes (21) und der andere Stangenteil (27) mit dem Widerlager (30) am zweiten Gelenkteil (5 bzw. 6) gelenkig verbunden ist, und dass die Schraubendruckfeder (25) sich mit einem Ende an dem einen Stangenteil (26) und mit dem anderen Ende an am anderen Stangenteil (27) abstützt.

5. Konzepthalter nach Anspruch 4, dadurch gekennzeichnet, dass der eine Stangenteil (26) an seinem freien Ende eine zur Längserstreckung der Stange quer gerichtete Rinne (28) aufweist, in die ein am Spreizglied-Kraftarm (23) angeordneter, zur Rinne (28) gleichgerichteter Zapfen (24) um seine Längsachse drehbar eingreift.

6. Konzepthalter nach Anspruch 3 oder 4, dadurch gekennzeichnet, dass der andere Stangenteil (27) am freien Ende einen Kugelkopf (29) aufweist und dass im Widerlager (30) des zweiten Gelenkteiles (5 bzw. 6) eine mit dem Kugelkopf (29) zusammenwirkende kugelkalottenförmige Gelenkpfanne angeordnet ist.

7. Konzepthalter nach einem der vorherigen Ansprüche, dadurch gekennzeichnet, dass jeweils der erste Gelenkteil (1 bzw. 5) an zwei einander abgewandten Seiten zueinander parallele Flächen (10) aufweist, in welchen jeweils eine zur Gelenkachse koaxial angeordnete Ringnut vorgesehen ist, in die je eine Bremsbacke (19) eingesetzt ist, ferner im ersten Gelenkteil (1 bzw. 5) eine im Durchmesser gegenüber den Ringnuten (18) kleinere und zu den Ringnuten (18) koaxial angeordnete Durchgangsbohrung (12) vorgesehen ist, zudem der zweite Gelenkteil (5 bzw. 6) aus zwei im wesentlichen rinnenförmig profilierten, gemeinsam ein Kastenprofil ergebenden Stäben zusammengefügt ist, die jeweils einen quer abstrebenden Drehzapfen (11) aufweisen, die zueinander gerichtet in die Durchgangsbohrung (12) des ersten Gelenkteiles (1 bzw. 5) drehbar eingreifen, ausserdem jeder Bremsbacke (19) ein Spreizglied (21) zugeordnet ist, deren Kraftarme (23) zueinander gleichgerichtet mit einem zu letzterem quer gerichteten Zapfen (24) miteinander verbunden sind, und dass am Zapfen (24) beider Spreizglieder (21) ein gemeinsames Federelement sowie ein gemeinsames Zugseil (15 bzw. 16) angreift.

8. Konzepthalter nach Anspruch 7, dadurch gekennzeichnet, dass in den Drehzapfen (11) beider Kragarm-Profilstäbe zueinander koaxial angeordnete Bohrungen (13) vorgesehen sind, in die ein Bolzen (14) eingesetzt ist.

9. Konzepthalter nach einem der vorherigen Ansprüche, dadurch gekennzeichnet, dass das die Konzepttragplatte (3) mit dem Kragarm (2) verbindende Gelenk als Kardangelenk (7) ausgebildet ist und dem Kardangelenk mindestens eine eigene Feststellvorrichtung, insbesondere in Form eines drehbar gelagerten Spannexzenters (33) zugeordnet ist.

10. Konzepthalter nach einem der vorherigen Ansprüche, dadurch gekennzeichnet, dass die Handhabe (17) von einer rückseitig der Konzepttragplatte (3) drehbar gelagerten Welle (31) radial abstrebt, die Welle (31) zu den durch das Kardangelenk (7) geführten Seilzügen (15, 16) quer, insbesondere rechtwinklig gerichtet ist und eine Scheibe, insbesondere ein Scheibensegment (32) trägt, an dessen Umfang die angespannten Seilzüge (15, 16) befestigt sind.

11. Konzepthalter nach Anspruch 10, dadurch gekennzeichnet, dass sich die Welle (31) nahezu über die gesamte Breite der Konzepttragplatte (3) erstreckt, das Scheibensegment (32) dem Kardangelenk (7) gegenüber angeordnet ist und dass an beiden Endteilen der Welle (31) je eine Handhabe (17) vorgesehen ist.

12. Konzepthalter nach einem der vorherigen Ansprüche, dadurch gekennzeichnet, dass der Kragarm (23) und/oder die die Schraubendruckfeder (25) tragende Führungsstange (26, 27) in ihrer Verschwenkbarkeit so begrenzt sind, dass der vom Kragarm (23) und der die Schraubenfeder (25) tragenden Führungsstange (26, 27) gebildete Winkel stets kleiner als 180° bleibt.

## Claims

1. Draft support for use in work places for writing, drawing, producing television pictures, and the like, consisting of a base part (1) and a multipiece cantilevered arm (2) articulated from it, which arm carries at its free end a draft-holder plate (3), whereby, pivotably linked to one another by pivoting joints (7, 8, 9) are the cantilevered arm (2) to the base part (1), the cantilevered arm parts (5, 6) to one another and the draft-holder plate (3) to the cantilevered arm (2), locking devices which are manually adjustable, and have at least frictional resistance, are associated with these pivoting joints (7, 8, 9), which at least make the tilting of the parts linked to one another more difficult, in addition a handle (17), which acts by a connecting link on several of the pivoting joints (7, 8, 9) associated with the locking devices, and is arranged near the draft-holder plate (3), in addition the connecting link and the locking devices are arranged inside the cantilevered arm parts (5, 6), and a control cable (15, 16), which crosses the middle axes of the joints, is provided as connecting link, characterized in that the pivoting joints have joint axes running parallel to one another, horizontally, transversely to the longitudinal direction of the cantilever arm, in that the locking devices are formed as internal shoe brakes each coaxially arranged to the joint axes, in such a way that one first hinged part (1 or 5 respectively) of every joint (8, 9) has at least one bore arranged coaxially with the joint axis, in which a substantially ring-shaped closed brake shoe (19), which can be prised open against spring resistance, is set, which is connected by means of an expanding link (21), which is fastened to the other, second hinged part (5 or 6 respectively), and is indirectly operated by the handle (17), which link engages between the ends of the shoe brake (19) which face each other, and is fastened to the second hinged part (5 or 6 respectively) so that it can be pivoted, and which brake shoe can be laid against the inner side of the bore to have at least frictional resistance, in that the expanding link (21) is fastened to be pivotable about an axis parallel to the joint axis, this rotation axis is situated between the two ends of the brake shoe (19) facing each other, furthermore this expanding link (21) has a substantially oval shape, whereby the small diameter of the expanding link (21) is approximately equal to the distance between the facing ends of the relaxed brake shoe (19), whilst the large diameter of the expanding link (21) is larger than the distance between the facing ends of the brake shoe (19) inserted on the inside of the bore, and in that from the expanding link (21) a force arm (23) projects, to which is attached a tilting spring element for setting this in the arrested position and a control cable (15 or 16 respectively) fastened to the handle (17) operative to release the brake shoe (19), and finally in that all the control cables (15, 16) are made as connecting links and can be operated together by means of the single handle (17).

2. Draft support according to Claim 1, characterized in that the inside of the bore and the surface of the brake shoe which engages with this in the arrested position are roughened, knurled or preferably toothed.

3. Draft support according to Claim 1 or 2, characterized in that as the spring element a helical compression spring (25) under tension is provided, which is supported on the one hand on the force arm (23) of the expanding link (21) and on the other hand on an abutment (30) of the second hinged part (5 or 6 respectively).

4. Draft support according to Claim 3, characterized in that the helical compression spring (25) is placed on a two-part guide rod, the parts of which (26, 27) telescope into one another, one part of the guide rod (26) is articulated by its free end with the force arm (23) of the expanding link (21) and the other part of the guide rod (27) is joined to the abutment (30) on the second hinged part (5 or 6 respectively), and in that the helical compression spring (25) is supported with one end on one part of the guide rod (26) and with the other end on the other part of the guide rod (27).

5. Draft support according to Claim 4, characterized in that one part of the guide rod (26) has at its free end a groove (28) at right angles to the longitudinal direction of the rod, in which a bearing (24), made to fit the groove, on the expanding link force arm (23) engages pivotably on its long axis.

6. Draft support according to Claim 3 or 4, characterized in that the other part of the guide rod (27) has a ball-head (29) on its free end and in that a spherical cup shaped joint socket is provided in the abutment (30) of the second hinged part (5 or 6 respectively) which cooperates with the ball-head (29).

7. Draft support according to one of the previous Claims, characterized in that the first hinged part (1 or 5 respectively) has parallel surfaces (10) on two sides facing each other, in which an annular groove arranged coaxially with the joint axis is provided, in which a brake shoe (19) is placed, moreover, in the first hinged part (1 or 5 respectively) a through hole (12), with a smaller diameter than the annular groove (18) and arranged coaxially with the annular groove (18), is provided, to which the second hinged part (5 or 6 respectively) is joined by two essentially ring shaped rods, which together form a box shape, each of which has a central pivot (11) projecting at right angles, which, pointing in the same direction as each other, pivotably engage in the through hole (12) of the first hinged part (1 or 5 respectively), in addition, each brake shoe (19) is provided with an expanding link (21), the parallel force arms (23) of which are joined together by a bearing (24) at right angles to them, and that both a common spring element and a common control cable (15 or 16 respectively) are fastened to the bearings (24) of both expanding links (21).

8. Draft support according to Claim 7, characterized in that in the central pivots (11) of both cantilever arm-bearings, drill holes (13) coaxial with on another are provided, in which a bolt (14) is placed.

9. Draft support according to one of the previous Claims, characterized in that the joint fastening the draft-holder plate (3) with the cantilever arm (2) is a universal joint (7) and the universal joint is provided with at least one position fixing device of its own, especially in the form of a rotatably fastened load-bearing eccentric cam (33).

10. Draft support according to one of the previous Claims, characterized in that the handle (17) projects radially from a pivotably fixed shaft (31) on the back of the draft-holder plate (3), the shaft (31) is directed transversely, especially at right angles, to the control cables (15, 16) led through the universal joint (7), and carries a disc, especially a segmented disc, to the periphery of which the stretched control cables (15, 16) are fastened.

11. Draft support according to Claim 10, characterized in that the shaft (31) extends over almost all the breadth of the draft-holder plate (3), the segmented disc (32) is opposite the universal joint (7) and at each of the two ends of the shaft (31) a handle (17) is provided.

12. Draft support according to one of the previous Claims, characterized in that the force arm (23) and/or the guide rods (26, 27) carrying a helical compression spring (25) have such limited pivoted movement that the angle formed between the force arm (23) and the guide rods (26, 27) carrying a helical compression spring (25) remains less than 180°.

## Revendications

1. Support de feuilles, accessoire de bureau, planche à dessin, écran et similaire, comprenant un élément de base (1) et un bras en porte à faux (2) composé, articulé sur ledit élément, dont l'extrémité libre supporte une plaque d'appui (3), le bras en porte à faux (2) étant disposé à pivotement sur l'élément de base (1), les éléments (5, 6) dudit bras pivotant l'un par rapport à l'autre, et la plaque d'appui (3) pivotant sur le bras en porte à faux (2), au moyen d'articulations (7, 8, 9), celles-ci étant dotées de dispositifs de blocage, réglables manuellement, agissant au moins par friction, rendant au moins plus difficile le pivotement des parties articulées les unes aux autres, comprenant en outre une manette (17) agissant, via un élément intermédiaire, sur plusieurs dispositifs de blocage associés aux articulations et disposée au moins à proximité de la plaque d'appui (3), l'élément intermédiaire et les dispositifs de blocage étant en outre disposés dans les éléments du bras en porte à faux (5, 6), une commande à câble (15, 16) passant par les axes médians d'articulation étant prévue comme élément intermédiaire, caractérisé en ce que les articulations présentent des axes de pivotement parallèles l'un par rapport à l'autre, horizontaux, orientés obliquement par rapport à l'extension longitudinale du bras en porte à faux, en ce que les dispositifs de blocage ont la forme de freins à mâchoires intérieures disposés coaxialement par rapport aux axes de pivotement, de telle sorte que, dans le premier élément articulé (1 et 5) de chaque articulation (8, 9), est prévu au moins un alésage disposé coaxialement par rapport à l'axe de pivotement, dans lequel est insérée une mâchoire de frein (19) quasi circulaire, fermée, dont l'ouverture est contrecarrée par la tension d'un ressort, qui est reliée au deuxième élément articulé (5 et 6) pour un entraînement rotatif, et peut être amenée contre le côté interne de l'alésage, au moins pour un entraînement par friction, via un élément extensible (21) actionnable directement par la manette (17), fixé au second élément articulé (5 et 6), et agissant entre les extrémités tournées l'une vers l'autre de la mâchoire de frein (19), en ce que l'élément extensible (21) est disposé à pivotement sur un axe parallèle à l'axe de pivotement, cet axe étant disposé entre les deux extrémités se faisant face de la mâchoire de frein (19), l'élément extensible (21) ayant en outre un profil essentiellement ovale, le petit diamètre de l'élément extensible (21) étant en substance égal à l'écartement des extrémités se faisant face de la mâchoire de frein (19) relâchée, tandis que le grand diamètre de l'élément extensible (21) est supérieur à l'écartement des extrémités se faisant face de la mâchoire de frein (19) appliquée sur le côté interne de l'alésage, et en ce qu'un bras d'actionnement (23) s'étend à partir de l'élément extensible (21), bras sur lequel agit un élément à ressort tendant à le faire pivoter dans la position de blocage, ainsi qu'une commande à câble (15 et 16) reliée à la manette (17), destinée à desserrer la mâchoire de frein (19), en ce que toutes les commandes à câbles (15, 16) sont enfin réalisées comme des éléments intermédiaires, actionnables simultanément au moyen de la manette (17).

2. Support de feuilles selon la revendication 1, caractérisé en ce que le côté interne de l'alésage et la surface des mâchoires de frein se trouvant engagée avec celui-ci dans la position de blocage sont rendus rugueux, moletés ou, de préférence, dentés.

3. Support de feuilles selon la revendication 1 ou 2, caractérisé en ce qu'il est prévu, comme élément élastique, un ressort de compression bobiné, précontraint (25), qui prend appui, d'une part, sur le bras d'actionnement (23) de l'élément extensible (21) et, d'autre part, sur une butée (30) du deuxième élément articulé (5 et 6).

4. Support de feuilles selon la revendication 3, caractérisé en ce que le ressort de compression bobiné (25) est rapporté sur une tige de guidage en deux parties, dont les éléments (26, 27) sont à emboîtement télescopique, une partie de la tige (26) étant articulée par son extrémité libre au bras d'actionnement (23) de l'élément extensible (21) et l'autre partie de la tige (27) sur la butée (30) du deuxième élément pivotant (5 et 6), et en ce que le ressort de compression bobiné (25) s'appuie, par une extrémité, sur la partie de tige (26) et, par l'autre extrémité, sur l'autre partie de tige (27).

5. Support de feuilles selon la revendication 4, caractérisé en ce que la partie de tige (26) présente à son extrémité libre une rainure (28) orientée obliquement par rapport à l'extension longitudinale de la tige, rainure dans laquelle un tourillon (24) placé sur le bras d'actionnement (23) de l'élément extensible, et orienté dans le même sens que la rainure (28), pivote sur son axe longitudinal.

6. Support de feuilles selon la revendication 3 ou 4, caractérisé en ce que l'autre partie de tige (27) présente à son extrémité libre une tête sphérique (29) et qu'une cavité d'articulation en forme de calotte sphérique, coopérant avec la tête sphérique, est prévue dans la butée (30) du deuxième élément articulé (5 et 6).

7. Support de feuilles selon l'une des revendications qui précèdent, caractérisé en ce que le premier élément articulé (1 et 5) présente, sur deux faces tournées l'une vers l'autre, des surfaces (10) parallèles entre elles, dans chacune desquelles est prévue une rainure annulaire disposée coaxialement par rapport à l'axe de pivotement, rainure dans laquelle est chaque fois insérée une mâchoire de frein (19), qu'en outre, dans le premier élément articulé (1 et 5), est prévu un alésage traversant (12) dont le diamètre est inférieur à celui des rainures annulaires (18) et qui est disposé coaxialement par rapport aux rainures annulaires (18), qu'en outre le deuxième élément articulé (5 et 6) est constitué essentiellement de barres profilées en forme de gouttière, réunies pour donner un profilé en caisson, chaque élément présentant un tourillon (11) s'étendant obliquement, qui se placent à pivotement, face à face, dans l'alésage traversant (12) du premier élément articulé (1 et 5), qu'en outre chaque mâchoire de frein (19) est dotée d'un élément extensible (21) dont les bras d'actionnement (23) alignés l'un sur l'autre sont reliés ensemble par un tourillon (24), orienté obliquement par rapport à ce dernier, et qu'un élément élastique commun ainsi qu'une commande à câble commune (15 et 16) agissent sur le tourillon (24) des deux éléments extensibles (21).

8. Support de feuilles selon la revendication 7, caractérisé en ce que des alésages (13) disposés coaxialement l'un par rapport à l'autre sont prévus dans les tourillons (11) des deux barres profilées des bras en porte à faux, un boulon (14) étant inséré dans ces alésages.

9. Support de feuilles selon l'une des revendications qui précèdent, caractérisé en ce que l'articulation reliant la plaque d'appui (3) au bras en porte à faux (2) a la forme d'un joint à la cardan (7), celui-ci étant doté, au moins, d'un dispositif de blocage propre, en particulier sous la forme d'un excentrique de tension (33) pivotant.

10. Support de feuilles selon une des revendications qui précèdent, caractérisé en ce que la manette (17) s'étend radialement à partir d'un arbre (31) logé derrière la plaque d'appui (3), l'arbre est orienté obliquement, et en particulier à angle droit, par rapport aux commandes à câbles (15, 16) passant par le joint à la cardan (7) et porte un disque, notamment un segment de disque (32), à la périphérie duquel sont fixées les commandes à câbles tendues (15, 16).

11. Support de feuilles selon la revendication 10, caractérisé en ce que l'arbre (31) s'étend en substance sur toute la largeur de la plaque d'appui (3), le segment de disque (32) est disposé en face du joint à la cardan (7) et une manette (17) est prévue aux deux extrémités de l'arbre (31).

12. Support de feuilles selon l'une des revendications qui précèdent, caractérisé en ce que le bras d'actionnement (23) et/ou la barre de guidage (26, 27) portant le ressort de compression bobiné (25) a sa capacité de pivotement limitée de manière telle que l'angle formé par le bras d'actionnement (23) et la tige de guidage (26, 27) portant le ressort de compression bobiné (25) reste toujours inférieur à 180°.

Fig.1

Fig.2

Fig.3

Fig.4

Fig.5

Fig.6

0 220 334